# EUROPÄISCHE PATENTSCHRIFT

(11) **EP 3 496 211 B1**
(45) Veröffentlichungstag und Bekanntmachung des Hinweises auf die Patenterteilung: **09.09.2020**
(21) Anmeldenummer: 17205935.4
(22) Anmeldetag: 07.12.2017
(51) Int. Cl.: H01R 13/52, H01R 13/506, H01R 13/58, H01R 13/59

(54) **ELEKTRISCHE VERBINDUNGSLEITUNG**
ELECTRIC COUPLER
LIGNE ÉLECTRIQUE

(43) Veröffentlichungstag der Anmeldung: 12.06.2019
(73) Patentinhaber: Aptiv Technologies Limited, St. Michael (BB)
(72) Erfinder: SCHMIDT, Rainer, 90411 Nürnberg (DE)
(74) Vertreter: Mader, Joachim

(56) Entgegenhaltungen:
- EP-A1- 3 249 757
- US-A1- 2011 130 035
- US-A1- 2014 273 540

## Beschreibung

Die Erfindung betrifft eine elektrische Verbindungsleitung, zum Herstellen einer elektrischen Verbindung zwischen zwei elektrischen Vorrichtungen. Insbesondere zum Verbinden von elektrischen Vorrichtungen in Fahrzeugen sowie ein Verfahren zum Herstellen einer elektrischen Verbindungsleitung.

### TECHNISCHER HINTERGRUND DER ERFINDUNG

Bei modernen Kraftfahrzeugantrieben, werden in einigen Bereichen sehr hochfrequente Vibrationen erzeugt. Schnell drehende Aggregate wie Turbolader, die zur Leistungssteigerung bei Verbrennungsmotoren eingesetzt werden, erzeugen solche hochfrequenten Vibrationen. Werden elektrische Leitungen in der Nähe dieser Aggregate angeordnet, sind auch diese den Vibrationen ausgesetzt. Insbesondere elektrische Steckverbindungen, die den Vibrationen ausgesetzt sind, weisen bereits nach kurzer Zeit negative Veränderungen auf. Die Steckergehäuse der Steckverbindungen sind so konstruiert, dass zwischen den Abmessungen der Kontaktelemente und dem elektrischen Kabel ein minimales Spiel vorhanden ist, um eine Montage der Kontaktelemente in das Steckergehäuse zu ermöglichen. Dieses notwendige Spiel ermöglicht jedoch eine geringe Bewegung der Kontaktelemente und des elektrischen Kabels, wenn sie Vibrationen ausgesetzt werden. Obwohl sehr klein, führen diese kleinen Bewegungen zu erhöhtem Verschleiß, Kontaktschwierigkeiten und möglicherweise Unterbrechungen der elektrischen Leitfähigkeit. Um die Bewegungen zu minimieren werden im Stand der Technik elastische Elemente eingesetzt. Festsitzt zwischen Stecker und Gegenstecker über Klemmrippen sollen Eigenbewegungen zumindest hier ausschließen. Elastische Gummidichtungen im Steckergehäuse, die das elektrische Kabel umgeben, sollen das elektrische Kabel gegen Feuchtigkeit dichten und die Vibrationen dämpfen. All diese Lösungen funktionieren bis zu einem gewissen Grad. Allerdings wird das Problem, insbesondere bei hochfrequenten Vibrationen, nicht zufriedenstellend gelöst.

Der Erfindung liegt die Aufgabe zu Grunde eine elektrische Verbindungsleitung zum Verbinden von elektrischen Aggregaten bereitzustellen, die die Nachteile des Stands der Technik vermeidet und robust gegenüber dem Einfluss von Vibrationen, sowie preiswert herzustellen ist.

Referenzdokument EP 3 249 757 A1 beschreibt einen wasserdichten Verbinder, umfassend: ein Kabel, in dem Metallanschlüsse mit einem Spitzenende verbunden sind, ein Gehäuse, das die Metallanschlüsse und einen Teil des Kabels aufnimmt, ein Dichtungselement, in dem eine Kabeldurchgangsöffnung angeordnet ist, die zu Vorder- und Rückseite geführt wird, die in das Gehäuse in einem Zustand eingebaut ist, in dem das Dichtungselement über das Kabel geführt wird und die eine Wasserdichtigkeit zwischen dem Kabel und dem Gehäuse gewährleistet.

Referenzdokument US 2011/130035 A1 beschreibt einen Verbinder, umfassend einen Kontakt, der mit einem Kabel verbunden ist, ein Gehäuse, das eine Durchgangsöffnung zur Aufnahme des mit dem Kabel verbundenen Kontakts aufweist, ein elastisches Dichtungselement, das eine hohle zylindrische Form aufweist, wobei das elastische Dichtungselement auf einer äußeren Umfangsfläche des Kabels angebracht und in einem hinteren Abschnitt der Durchgangsöffnung untergebracht ist. Referenzdokument US 2014/273540 A1 beschreibt eine Kabelgreiferanordnung mit einer Endkappe mit einer Bohrung mit abnehmendem Durchmesser von einem Ende zum anderen, einer Kabelhaltehülse aus einem leicht komprimierbaren Material und einem Gehäuse mit einer Innenbohrung zur Aufnahme eines Kabels.

### BESCHREIBUNG DER ERFINDUNG

Die Aufgabe wird durch eine elektrische Verbindungsleitung nach Anspruch 1 gelöst.

Insbesondere durch eine elektrische Verbindungsleitung umfassend ein Steckergehäuse, eine elektrische Leitung, ein Ringelement, ein elastisches Dichtelement und eine Kappe. Das Steckergehäuse weist einen röhrenförmigen Einführbereich, zum Einfuhren der elektrischen Leitung in das Steckergehäuse, auf. Der Einführbereich ist entlang einer Längsachse der elektrischen Leitung ausgerichtet und weist eine Verengung auf. Die Kappe ist mit Haltemitteln am Steckergehäuse befestigt. Die Kappe weist eine Öffnung zum Hindurchführen der elektrischen Leitung auf. Das Ringelement umgibt die elektrische Leitung zumindest teilweise und das Dichtelement umgibt die elektrische Leitung. Das Ringelement und das Dichtelement sind zwischen der Verengung und der Kappe angeordnet.

Bei der erfinderischen, elektrischen Verbindungsleitung wird das Spiel, das die elektrische Leitung innerhalb des Steckergehäuses hat, durch das Ringelement, zumindest in dem Bereich wo das Ringelement sowohl das Steckergehäuse als auch die elektrische Leitung berührt, eliminiert. Vibrationen, die außerhalb des Steckergehäuses auf die elektrische Leitung wirken und diese ebenfalls vibrieren lassen, können sich von diesem Bereich aus, in Richtung des Kontaktelements, weniger stark fortpflanzen. Dieser Aufbau verhindert bzw. verringert zumindest die, von der elektrischen Leitung herrührenden, Vibrationen des Kontaktelements innerhalb des Steckergehäuses. Dadurch wird ein erhöhter Verschleiß des Kontaktelements vermieden und die Lebensdauer und Zuverlässigkeit der elektrischen Verbindung verbessert. Wobei die elektrische Verbindungsleitung preiswert herzustellen ist, da sie mit Standard Produktionsanlagen herzustellen ist. Die hier verwendeten Begriffe elektrische Leitung und elektrisches Kabel bzw. Kabel meinen alle eine elektrische Leitung die aus dem Stand der Technik bekannt ist. Wobei diese elektrischen Leitungen einen leitfähigen metallischen Kern (Vollmaterial oder Litzen) und eine nichtleitende, den Kern umlaufende Isolation aufweist.

Ein Verfahren zum Herstellen der elektrischen Verbindungsleitung gemäß der Erfindung ist in Anspruch 13 offenbart.

Bevorzugt weist die Verengung mindestens eine, im Bezug zur Längsachse geneigte und der Kappe gegenüberliegende, erste Führungsfläche auf und das Ringelement weist eine, im Bezug zur Längsachse in einem zweiten Führungswinkel geneigte und der ersten Führungsfläche gegenüberliegende, zweite Führungsfläche auf. Die sich gegenüberliegenden Führungsflächen bilden die Kontaktfläche zwischen Steckergehäuse und Ringelement.

Besonders bevorzugt erstreckt sich die erste Führungsfläche von einer inneren Oberfläche des röhrenförmigen Einführbereichs, in einem ersten Führungswinkel zur Längsachse, in den röhrenförmigen Einführbereich und bildet dabei eine trichterförmige Struktur. Die erste Führungsfläche ist in Richtung des Kontaktelements geneigt, damit eine Kraft, die auf das Ringelement, entlang der Längsachse, in die Richtung des Kontaktelements wirkt, das Ringelement in Richtung der elektrischen Leitung drängt. Daraus resultiert eine Kraft, die versucht den Durchmesser des Ringelements zu reduzieren.

Bevorzugt weisen der erste Führungswinkel und der zweite Führungswinkel den gleichen Wert im Bezug zur Längsachse auf. Weisen beide Führungsflächen den gleichen Winkel im Bezug zur Längsachse auf liegen sie in den Kontaktbereichen plan aneinander und können sich leicht gegeneinander verschieben.

Besonders bevorzugt weisen der erste Führungswinkel und der zweite Führungswinkel einen Wert von 45° im Bezug zur Längsachse auf. Ein Wert von 45° ermöglicht bei moderatem Kraftaufwand eine moderate Verringerung des Durchmessers des Ringelements.

Bevorzugt wird die erste Führungsfläche durch eine Vielzahl von Ersten Teilflächen gebildet, wobei die Ersten Teilflächen, an Rippen, die in den röhrenförmigen Einführbereich ragen, angeordnet sind. Die Aufteilung der ersten Führungsfläche in Ersten Teilflächen, ermöglicht es, Material und Gewicht beim Steckergehäuse einzusparen. Wobei die Funktionsfähigkeit erhalten bleibt.

Bevorzugt wird die zweite Führungsfläche des Ringelements entlang der Längsachse von dem elastischen Dichtelement, elastisch gegen die erste Führungsfläche der Verengung gepresst. Das Dichtelement presst, über die gesamte Lebenszeit der elektrischen Verbindungsleitung, das Ringelement elastisch in Richtung des Kontaktelements. Dadurch werden Alterungserscheinungen, die bei starren Konstruktionen auftreten können, vermieden.

Besonders bevorzugt besteht das Ringelement aus einem ringförmigen Körper, der eine Trennstelle aufweist. Ein Ringelement bei dem eine Trendstelle eingefügt wurde, ist wesentlich flexibler wenn es radial verformt wird. Das Ringelement kann mit wenig Kraftaufwand radial verformt werden und entformt sich selbstständig wenn die Kraft entfernt wird. Die Größe der Durchmesseränderung ist im Wesentlichen von der Größe der Trennstelle abhängig. Allerdings sollte die Trennstelle im Verhältnis zum Gesamtumfang klein gewählt werden. In der Praxis sollte die Trennstelle nicht mehr als 10 % vom Gesamtumfang betragen. Das Ringelement kann aus Metall oder Kunststoff hergestellt werden. Wobei die Trennstelle bei metallischen Ringelementen durch Sägen oder Fräsen eingebracht werden kann. Bei Ringelementen aus Kunststoff kann die Trennstelle bereits im Spritzgusswerkzeug vorgesehen werden.

Bevorzugt verläuft die Trennstelle diagonal zur Rotationsachse des ringförmigen Körpers. Durch die Lage der Trendstelle bzw. der Anordnung des Schnitts durch das Ringelement können Eigenschaften des Ringelements positiv verändert werden.

Bevorzugt weist das Ringelement eine Basis auf von der sich eine Mehrzahl von Fingern erstrecken. Die Basis grenzt an das Dichtelement an. Die Finger sind parallel zur Längsachse, entlang des Umfangs des Ringelements verteilt. Die zweite Führungsfläche wird durch eine Vielzahl von zweiten Teilflächen gebildet, die an den Fingerenden angeordnet sind. Die Finger des Ringelements sind flexibel, sodass sie sich verformen können. Jeder einzelne Finger hat einen geringen Abstand zum benachbarten Finger. Werden alle Finger nach innen verformt bewegen sie sich auf die benachbarten Finger zu und bilden dadurch eine kleinere Öffnung als im ungeformten Zustand. In dieser kleineren Öffnung kann die elektrische Leitung spielfrei in der Position gehalten werden.

Besonders bevorzugt weist das Ringelement einen verringerten Durchmesser auf solange die zweite Führungsfläche des Ringelements entlang der Längsachse gegen die erste Führungsfläche der Verengung gepresst wird. Das Ringelement wird mit seinem inneren Umfang gegen den äußeren Umfang der elektrischen Leitung gedrückt, solange die erste Führungsfläche gegen die zweite Führungsfläche gedrückt wird. Dadurch bleibt eine mechanische Verbindung zwischen der elektrischen Leitung und dem Steckergehäuse erhalten.

Gemäß der Erfindung ist das elastische Dichtelement zwischen der Kappe und dem Ringelement elastisch verformt. Das elastische Dichtelement ist zwischen der Kappe und dem Ringelement elastisch verformt und erzeugt dadurch die benötigte Kraft, um das Ringelement in Richtung des Kontaktelements zu pressen.

Bevorzugt umfassen die Haltemittel zum Befestigen der Kappe am Steckergehäuse Rasthaken, die mit Vorsprüngen am Steckergehäuse kooperieren um die Kappe am Steckergehäuse zu halten. Dieser Aufbau hat sich in der Technik als besonders robust und preiswert etabliert. Es sind allerdings auch andere Befestigungsmöglichkeiten denkbar.

Bevorzugt ist die elektrische Verbindungsleitung für den Einsatz in Fahrzeugen ausgebildet. Besonders bei Fahrzeugen sind Probleme, die von Vibrationen herrühren, bekannt. Die erfinderische elektrische Verbindungsleitung ist für diese Anwendung besonders geeignet.

### KURZBESCHREIBUNG DER ABBILDUNGEN

Nachfolgend wird die Erfindung anhand einer vorteilhaften Ausführungsform rein beispielhaft unter Bezugnahme auf die beigefügten Zeichnungen beschrieben. Es zeigen:
Fig. 1 zeigt eine elektrische Verbindungsleitung nach dem Stand der Technik in einer Schnittdarstellung.
Fig. 2 zeigt die erfinderische elektrische Verbindungsleitung in einer Schnittdarstellung.
Fig. 3 zeigt Details der Schnittdarstellung aus Figur 2.
Fig. 4 zeigt eine Schnittdarstellung der erfinderischen elektrischen Verbindungsleitung, teilweise montiert.
Fig. 5 zeigt die Krafteinwirkung und die Bewegungsrichtung des Ringelements und des Steckergehäuses in einer Prinzipdarstellung.
Fig. 6 zeigt eine Schnittdarstellung eines Steckergehäuses in Schnittdarstellung.
Fig. 7 zeigt eine perspektivische Darstellung des Ringelements der erfinderischen elektrischen Verbindungsleitung.
Fig. 8 zeigt eine Schnittdarstellung eines alternativen Steckergehäuses in Schnittdarstellung.
Fig. 9 zeigt eine perspektivische Darstellung eines alternativen Ringelements der erfinderischen elektrischen Verbindungsleitung.
Fig. 10 zeigt eine Schnittdarstellung einer alternativen Ausführungsform eines der erfinderischen elektrischen Verbindungsleitung, teilweise montiert.
Fig. 11 zeigt Details der in Figur 10 gezeigten alternativen Ausführungsform, in montiertem Zustand.

### BESCHREIBUNG EINES AUSFÜHRUNGSBEISPIELS

Im Folgenden werden bevorzugte Ausgestaltungen der Erfindung näher beschrieben. Ähnliche oder korrespondierende Einzelheiten des erfindungsgemäßen Gegenstandes sind mit denselben Bezugszeichen versehen.

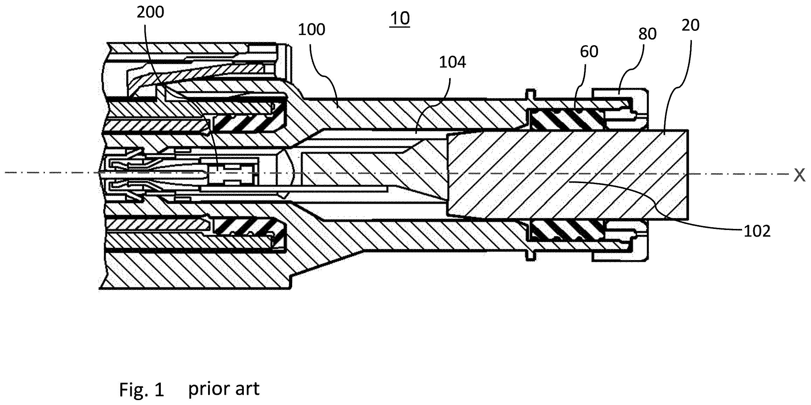

Figur 1 zeigt eine elektrische Verbindungsleitung nach dem Stand der Technik in einer Schnittdarstellung. Eine elektrische Verbindungsleitung 10 umfassend ein Steckergehäuse 100, eine elektrische Leitung 20, ein elastisches Dichtelement 60 und eine Kappe 80. Das Steckergehäuse 100 weist einen röhrenförmigen Einführbereich 102 zum Einführen der elektrischen Leitung 20 in das Steckergehäuse 100 auf. Ein Kontaktelement 200 ist an der elektrischen Leitung 20 angebracht und im Steckergehäuse 100 befestigt. Der Einführbereich 102 ist entlang einer Längsachse X der elektrischen Leitung 20 ausgerichtet und weist eine Verengung 104 auf. Die Kappe 80 ist mit Haltemittel am Steckergehäuse 100 befestigt. Die Kappe 80 weist eine Öffnung 82 zum Hindurchführen der elektrischen Leitung 20 auf. Das Dichtelement 60 umgibt die elektrische Leitung 20. Das Dichtelement 60 ist zwischen der Verengung 104 und der Kappe 80 angeordnet.

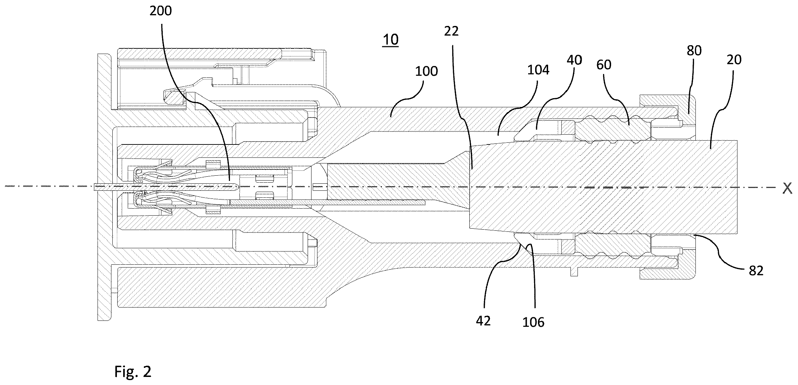

Figur 2 zeigt Details der erfinderischen elektrischen Verbindungsleitung in einer Schnittdarstellung. Eine elektrische Verbindungsleitung 10, umfassend ein Steckergehäuse 100, eine elektrische Leitung 20 mit einem Leitungsende 22, einen Ringelement 40, ein elastisches Dichtelement 60 und eine Kappe 80. Das Steckergehäuse 100 weist einen röhrenförmigen Einführbereich 102 zum Einführen der elektrischen Leitung 20 in das Steckergehäuse 100 auf. Der Einführbereich 102 ist entlang einer Längsachse X der elektrischen Leitung 20 ausgerichtet und weist eine Verengung 104 auf. Die Kappe 80 ist mit Haltemittel am Steckergehäuse 100 befestigt. Die Kappe 80 weist eine Öffnung 82 zum Hindurchführen der elektrischen Leitung 20 auf. Das Ringelement 40 umgibt die elektrische Leitung zumindest teilweise und das Dichtelement 60 umgibt die elektrische Leitung. Das Ringelement 40 und das Dichtelement 60 sind zwischen der Verengung 104 und der Kappe 80 angeordnet.

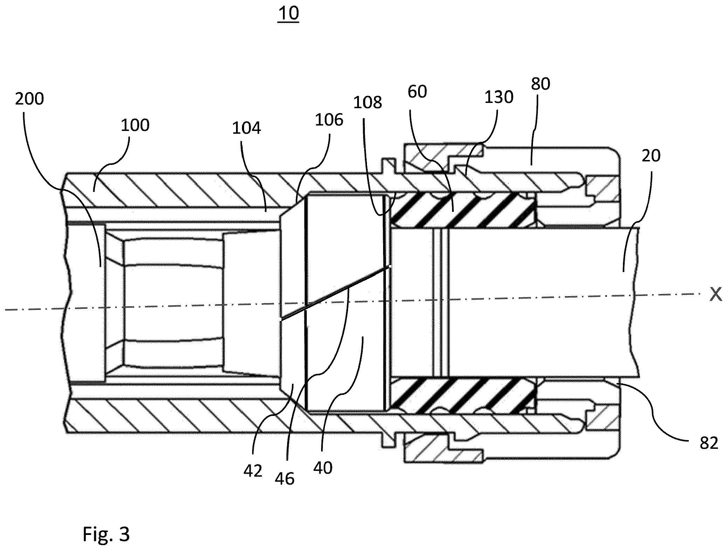

Figur 3 zeigt Details der Schnittdarstellung aus Figur 2. Die Verengung 104 weist mindestens eine, im Bezug zur Längsachse X geneigte und der Kappe 80 gegenüberliegende, erste Führungsfläche 106 auf. Das Ringelement 40 weist eine, im Bezug zur Längsachse X in einem zweiten Führungswinkel 44 geneigte und der ersten Führungsfläche 106 gegenüberliegende, zweite Führungsfläche 42 auf. Die erste Führungsfläche 106 erstreckt sich von einer inneren Oberfläche 108 des röhrenförmigen Einführbereichs 102, in einem ersten Führungswinkel 120 zur Längsachse X, in den röhrenförmigen Einführbereichs 102 und bildet dabei eine trichterförmige Struktur. Der erste Führungswinkel 120 und der zweite Führungswinkel 44 weisen den gleichen Wert im Bezug zur Längsachse X auf. Der erste Führungswinkel 120 und der zweite Führungswinkel 44 weisen einen Wert von 45° im Bezug zur Längsachse X auf. Das elastische Dichtelement 60 ist zwischen der Kappe 80 und dem Ringelement 40 elastisch verformt. Das Ringelement 40 und die zweite Führungsfläche 42 des Ringelements 40 wird entlang der Längsachse X von dem elastischen Dichtelement 60, elastisch gegen die erste Führungsfläche 106 der Verengung 104 gepresst. Das Ringelement 40 weist einen verringerten Durchmesser auf solange die zweite Führungsfläche 42 des Ringelements 40 entlang der Längsachse X gegen die erste Führungsfläche 106 der Verengung 104 gepresst wird.

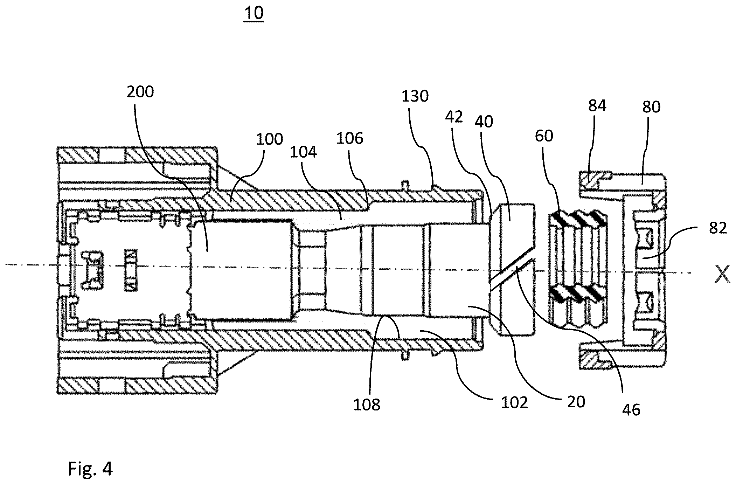

Figur 4 zeigt eine Schnittdarstellung der erfinderischen elektrischen Verbindungsleitung, teilweise montiert. Das Haltemittel zum Befestigen der Kappe 80 am Steckergehäuse 100 umfasst Rasthaken 84, die mit Vorsprüngen 130 am Steckergehäuse 100 kooperieren, um die Kappe am Steckergehäuse 100 zu halten

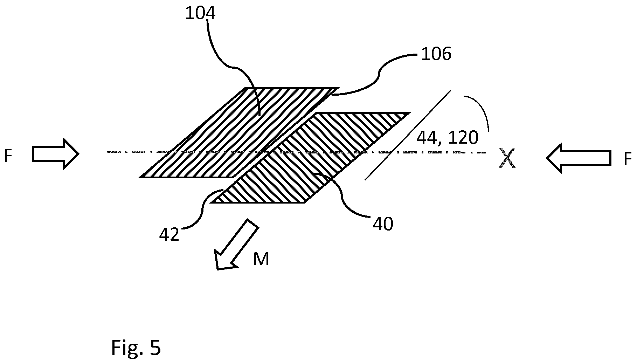

Figur 5 zeigt die Krafteinwirkung und die Bewegungsrichtung des Ringelements und des Steckergehäuses in einer Prinzipdarstellung. Die Kraft F die entlang der Längsachse X das Ringelement 40 gegen das Steckergehäuse 100 drückt, hat zur Folge, dass sich die beiden Teile entgegengesetzt zueinander bewegen. Das Ringelement 40 begleitet entlang der ersten Führungsfläche 106 des Steckergehäuses 100. Damit dieser Effekt auftritt muss der erste Führungswinkel 120 der zweite Führungswinkel 44 einen Winkel von kleiner als 90° zur Längsachse X aufweisen. Ein erster Führungswinkel von 45° und ein zweiter Führungswinkel von 45° bilden einen guten Kompromiss aus Kraftaufwand und resultierender Verschiebungsstrecke.

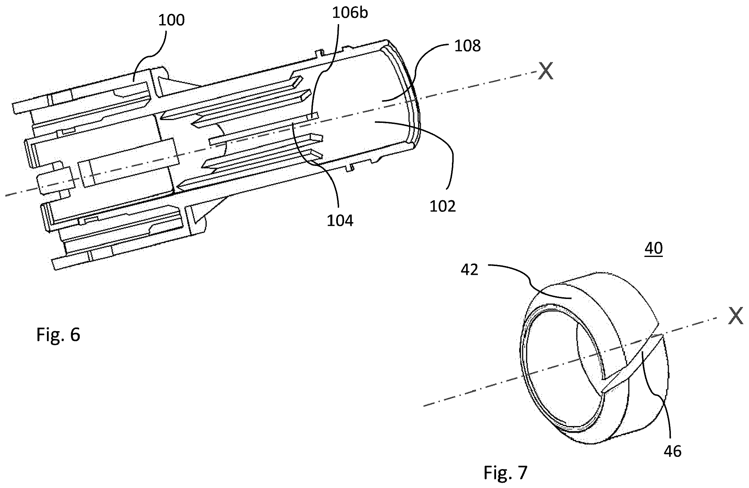

Figur 6 zeigt eine Schnittdarstellung eines Steckergehäuses in Schnittdarstellung. Die erste Führungsfläche 106 wird durch eine Vielzahl von ersten Teilflächen 106b gebildet. Die ersten Teilflächen 106b sind an Rippen 110, die in den röhrenförmigen Einführbereich 102 ragen, angeordnet.

Figur 7 zeigt eine perspektivische Darstellung eines Ringelements 40 der erfinderischen elektrischen Verbindungsleitung 10. Das Ringelement 40 besteht aus einem ringförmigen Körper, der eine Trennstelle 46 aufweist. Die Trennstelle 46 verläuft diagonal zur Rotationsachse des ringförmigen Körpers 40.

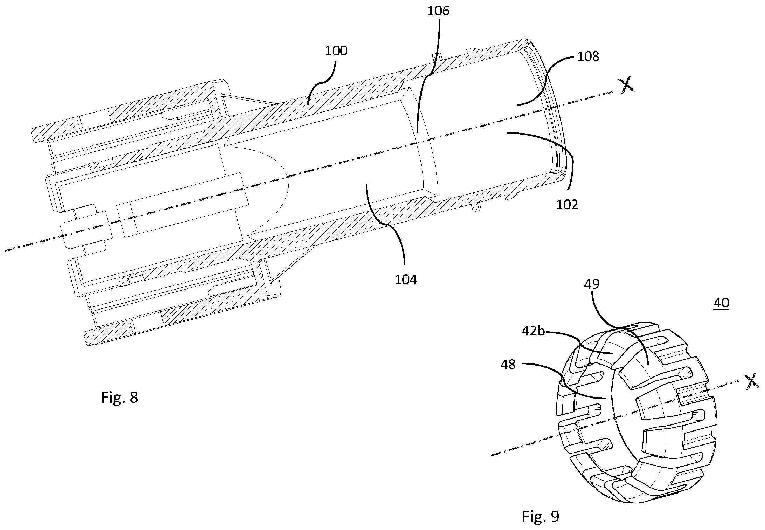

Figur 8 zeigt eine Schnittdarstellung eines alternativen Steckergehäuses 100 in Schnittdarstellung. Der Einführbereich 102 verjüngt sich entlang der ersten Führungsfläche 106 und erstreckt sich als Verengung 104 entlang der Längsachse X.

Figur 9 zeigt eine perspektivische Darstellung eines alternativen Ringelements der erfinderischen elektrischen Verbindungsleitung 10. Das Ringelement 40 weist eine Basis 48 auf von der sich eine Mehrzahl von Fingern 48 erstrecken. Die Finger 49 erstrecken sich parallel zur Längsachse X von der Basis 48. Die Finger 49 sind entlang des Umfangs des Ringelements 40 angeordnet. Die zweite Führungsfläche 42 wird durch eine Vielzahl von zweiten Teilflächen 42b gebildet, die an den Fingerenden angeordnet sind.

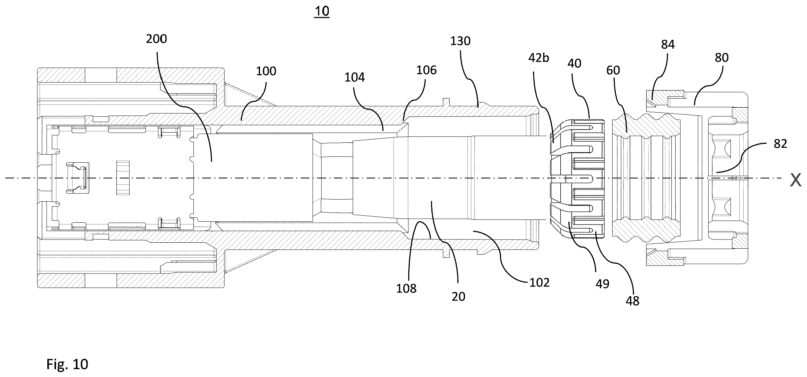

Figur 10 zeigt eine Schnittdarstellung einer alternativen Ausführungsform eines der erfinderischen elektrischen Verbindungsleitung, teilweise montiert. Die Basis 48 des Ringelements 40 ist an der dem Dichtelement 60 zugewandten Seite angeordnet. Die zweiten Teilflächen 42b sind gegenüber der ersten Führungsfläche 106 angeordnet.

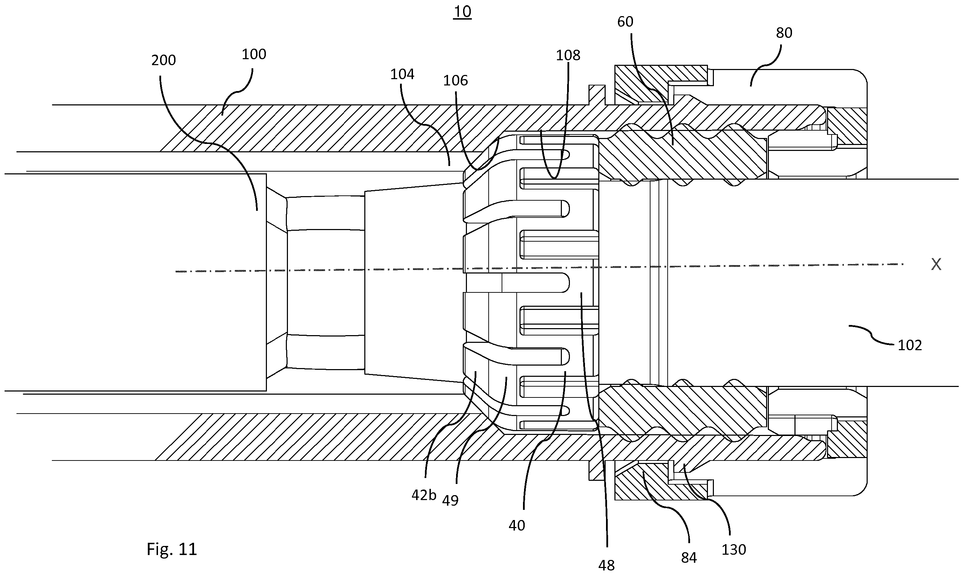

Fig. 11 zeigt Details der in Figur 10 gezeigten alternativen Ausführungsform, in montiertem Zustand. Das Ringelement 40 befindet in seiner Endposition im Steckergehäuse 100. Das elastische Dichtelement 60 drückt gegen die Basis 48 und somit auch das gesamte Ringelement 40 in Richtung der Verengung 104. Die zweiten Teilflächen 42b gleiten entlang der ersten Führungsfläche 106 wodurch die Finger 49 in Richtung der elektrischen Leitung 20 geformt werden. Das Dichtelement 60 wird durch die Kappe 80 in Position gehalten. Wobei die Kappe 80 durch die Kooperation eines Rasthakens 84 an der Kappe 80 und eines Vorsprung 130 am Steckergehäuse 100 in Position gehalten wird.

## Patentansprüche

1. Elektrische Verbindungsleitung (10) umfassend ein Steckergehäuse, (100) eine elektrische Leitung (20), einen Ringelement (40), ein elastisches Dichtelement (60) und eine Kappe (80), wobei das Steckergehäuse (100) einen röhrenförmigen Einführbereich (102) zum Einführen der elektrischen Leitung (20) in das Steckergehäuse (100) aufweist, wobei der Einführbereich (102) entlang einer Längsachse (X) der elektrischen Leitung (20) ausgerichtet ist und eine Verengung (104) aufweist, die Kappe (80) ist mit Haltemitteln am Steckergehäuse (100) befestigt, die Kappe (80) weist eine Öffnung (82) zum Hindurchführen der elektrischen Leitung (20) auf, wobei das Ringelement (40) die elektrische Leitung zumindest teilweise umgibt und das Dichtelement (60) die elektrische Leitung umgibt, wobei das Ringelement (40) und das Dichtelement (60) zwischen der Verengung (104) und der Kappe (80) angeordnet sind, **dadurch gekennzeichnet, dass** das elastische Dichtelement (60) zwischen der Kappe (80) und dem Ringelement (40) elastisch verformt ist.

2. Elektrische Verbindungsleitung (10) nach Anspruch 1, wobei die Verengung (104) mindestens eine, im Bezug zur Längsachse (X) geneigte und der Kappe (80) gegenüberliegende, erste Führungsfläche (106) aufweist und wobei das Ringelement (40) eine, im Bezug zur Längsachse (X) in einem zweiten Führungswinkel (44) geneigte und der ersten Führungsfläche (106) gegenüberliegende, zweite Führungsfläche (42) aufweist.

3. Elektrische Verbindungsleitung (10) nach dem vorhergehenden Anspruch, wobei sich die erste Führungsfläche (106) von einer inneren Oberfläche (108) des röhrenförmigen Einführbereichs (102), in einem ersten Führungswinkel (120) zur Längsachse (X), in den röhrenförmigen Einführbereichs (102) erstreckt und dabei eine trichterförmige Struktur bildet.

4. Elektrische Verbindungsleitung (10) nach dem vorhergehenden Anspruche, wobei der erste Führungswinkel (120) und der zweite Führungswinkel (44) den gleichen Wert im Bezug zur Längsachse (X) aufweisen.

5. Elektrische Verbindungsleitung (10) nach Anspruch 3, wobei der erste Führungswinkel (120) und der zweite Führungswinkel (44) einen Wert von 45° im Bezug zur Längsachse (X) aufweisen.

6. Elektrische Verbindungsleitung (10) nach einem der Ansprüche 2 bis 5, wobei die erste Führungsfläche (106) durch eine Vielzahl von Ersten Teilflächen (106b) gebildet wird, wobei die Ersten Teilflächen (106b), an Rippen (110), die in den röhrenförmigen Einführbereich (102) ragen, angeordnet sind.

7. Elektrische Verbindungsleitung (10) nach einem der Ansprüche 2 bis 6, wobei die zweite Führungsfläche (42) des Ringelements (40) entlang der Längsachse (X) von dem elastischen Dichtelement (60), elastisch gegen die erste Führungsfläche (106) der Verengung (104) gepresst wird.

8. Elektrische Verbindungsleitung (10) nach einem der vorhergehenden Ansprüche, wobei das Ringelement (40) aus einem ringförmigen Körper besteht, der eine Trennstelle (46) aufweist.

9. Elektrische Verbindungsleitung (10) nach dem vorhergehenden Anspruch, wobei die Trennstelle (46) diagonal zur Rotationsachse des ringförmigen Körpers verläuft.

10. Elektrische Verbindungsleitung (10), nach einem der Ansprüche 2 bis 7, wobei das Ringelement (40) eine Basis (48) aufweist von der sich eine Mehrzahl von Fingern (49) erstrecken, wobei die Basis (48) an das Dichtelement (60) angrenzt und wobei sich die Finger (49), parallel zur Längsachse (X), verteilt entlang des Umfangs des Ringelements (40), von der Basis (48) erstrecken, wobei die zweite Führungsfläche (42) durch eine Vielzahl von zweiten Teilflächen (42b) gebildet wird, die an den Fingerenden angeordnet sind.

11. Elektrische Verbindungsleitung (10) nach einem der Ansprüche 2 bis 6, wobei das Ringelement (40) einen verringerten Durchmesser aufweist solange die zweite Führungsfläche (42) des Ringelements (40) entlang der Längsachse (X) gegen die erste Führungsfläche (106) der Verengung (104) gepresst wird.

12. Elektrische Verbindungsleitung (10) nach einem der vorhergehenden Ansprüche, wobei die Haltemittel zum Befestigen der Kappe (80) am Steckergehäuse (100) Rasthaken (84) umfasst, die mit Vorsprüngen (130) am Steckergehäuse (100) kooperieren, um die Kappe am Steckergehäuse (100) zu halten.

13. Verfahren zum Herstellen einer elektrischen Verbindungsleitung (10) nach einem der vorhergehenden Ansprüche, umfassend die Schritte:
Bereitstellen eines Steckergehäuses (100), eine elektrische Leitung (20), eines Ringelements (40), eines elastischen Dichtelements (60) einer Kappe (80) und eines Kontaktelements (200);
Hindurchschieben eines Leitungsendes (22) der elektrischen Leitung (20) durch die Öffnung (82) der Kappe (80);
aufschieben des elastischen Dichtelements (60) auf das Leitungsende (22) der elektrischen Leitung (20);
Aufschieben des Ringelements (40) auf das Leitungsende (22) der elektrischen Leitung (20);
Hindurchschieben des Leitungsendes (22) durch den rohrförmigen Einführbereich (102), durch das Stecker Gehäuse (100) hindurch;
Anbringen und elektrisch Verbinden des Kontaktelements (200) anders Leitungsende (22) der elektrischen Leitung (20);
Zurückziehen der Leitung (20), sodass das Kontaktelement (200) in das Steckergehäuse (100) bewegt wird und dort einrastet;
Schieben der Kappe (80) in Richtung des Steckergehäuses (100) bis die Haltemittel die Kappe (80) am Steckergehäuse (100) fixiert, wobei das Ringelement (40) gegen eine Verengung (104) im Steckergehäuse (100) gepresst wird, das elastische Dichtelement (60) zwischen der Kappe (80) und dem Ringelement (40) elastisch verformt ist und dadurch die elektrische Leitung (20) im Steckergehäuse (100) fixiert.

14. Fahrzeug mit einer elektrischen Verbindungsleitung (10) nach einem der Ansprüche 1-12.

## Claims

1. An electrical connection line (10) comprising a plug housing (100), an electrical line (20), a ring element (40), an elastic sealing element (60) and a cap (80), wherein the plug housing (100) comprises a tubular insertion portion (102) for inserting the electrical line (20) into the plug housing (100), wherein the insertion portion (102) is aligned along a longitudinal axis (X) of the electrical line (20) and comprises a constriction (104), the cap (80) is fastened to the plug housing (100) by retention means, the cap (80) comprises an opening (82) for passing the electrical line (20) therethrough, wherein the ring element (40) at least partially encloses the electrical line and the sealing element (60) encloses the electrical line, wherein the ring element (40) and the sealing element (60) are arranged between the constriction (104) and the cap (80),
**characterized in that** the elastic sealing element (60) is elastically deformed between the cap (80) and the ring element (40).

2. Electrical connection line (10) according to claim 1, wherein the constriction (104) has at least one first guide surface (106) inclined with respect to the longitudinal axis (X) and opposite the cap (80), and wherein the ring element (40) has a second guide surface (42) inclined with respect to the longitudinal axis (X) at a second guide angle (44) and opposite the first guide surface (106).

3. Electrical connection line (10) according to the preceding claim, wherein the first guide surface (106) extends from an inner surface (108) of the tubular insertion portion (102), at a first guide angle (120) to the longitudinal axis (X), into the tubular insertion portion (102), thereby forming a funnel-shaped structure.

4. Electrical connection line (10) according to the preceding claim, wherein the first guide angle (120) and the second guide angle (44) have the same value with respect to the longitudinal axis (X).

5. Electrical connection line (10) according to claim 3, wherein the first guide angle (120) and the second guide angle (44) have a value of 45° with respect to the longitudinal axis (X).

6. Electrical connection line (10) according to one of claims 2 to 5, wherein the first guide surface (106) is formed by a plurality of first partial surfaces (106b), the first partial surfaces (106b) being arranged on ribs (110) projecting into the tubular insertion portion (102).

7. Electrical connection line (10) according to one of claims 2 to 6, wherein the second guide surface (42) of the ring element (40) is pressed along the longitudinal axis (X) by the elastic sealing element (60), elastically against the first guide surface (106) of the constriction (104).

8. Electrical connection line (10) according to one of the preceding claims, wherein the ring element (40) consists of an annular body having a separation point (46).

9. Electrical connection line (10) according to the preceding claim, wherein the separation point (46) is diagonal to the rotational axis of the annular body.

10. Electrical connection line (10), according to one of claims 2 to 7, wherein the ring element (40) has a base (48) from which a plurality of fingers (49) extend, wherein the base (48) is adjacent to the sealing element (60) and wherein the fingers (49) extend from the base (48) parallel to the longitudinal axis (X), distributed along the circumference of the ring element (40), wherein the second guide surface (42) is formed by a plurality of second partial surfaces (42b) which are arranged at the finger ends.

11. Electrical connection line (10) according to one of claims 2 to 6, wherein the ring element (40) has a reduced diameter as long as the second guide surface (42) of the ring element (40) is pressed along the longitudinal axis (X) against the first guide surface (106) of the constriction (104).

12. Electrical connection line (10) according to one of the preceding claims, wherein the retaining means for securing the cap (80) to the connector housing (100) comprise latching hooks (84) which cooperate with projections (130) on the connector housing (100) to retain the cap on the connector housing (100).

13. A method of manufacturing an electrical connection line (10) according to one of the preceding claims, comprising the steps:
providing a connector housing (100), an electrical line (20), a ring element (40), an elastic sealing element (60), a cap (80) and a contact element (200);
pushing a line end (22) of the electrical line (20) through the opening (82) of the cap (80);
pushing the elastic sealing element (60) onto the line end (22) of the electrical line (20);
sliding the ring element (40) onto the line end (22) of the electrical line (20);
pushing the line end (22) through the tubular insertion portion (102), through the connector housing (100);
attaching and electrically connecting the contact element (200) to the other end (22) of the electrical line (20);
retracting the line (20) so that the contact element (200) is moved into the connector housing (100) and latches therein;
pushing the cap (80) in the direction of the connector housing (100) until the retaining means fixes the cap (80) to the connector housing (100), wherein the ring element (40) is pressed against a constriction (104) in the connector housing (100), the elastic sealing element (60) is elastically deformed between the cap (80) and the ring element (40) and thereby fixes the electrical line (20) in the connector housing (100).

14. A vehicle having an electrical connecting line (10) according to one of claims 1-12.

## Revendications

1. Câble de connexion (10) électrique comprenant un boîtier enfichable (100), un câble (20) électrique, un élément annulaire (40), un élément d'étanchéité (60) élastique et un capuchon (80), dans lequel le boîtier enfichable (100) présente une zone d'introduction (102) de forme tubulaire pour introduire le câble (20) électrique dans le boîtier enfichable (100), dans lequel la zone d'introduction (102) est orientée le long d'un axe longitudinal (X) du câble (20) électrique et présente un rétrécissement (104), le capuchon (80) est fixé par des moyens de maintien au niveau du boîtier enfichable (100), le capuchon (80) présente une ouverture (82) pour guider de part en part le câble (20) électrique, dans lequel l'élément annulaire (40) entoure au moins en partie le câble électrique et l'élément d'étanchéité (60) entoure le câble électrique, dans lequel l'élément annulaire (40) et l'élément d'étanchéité (60) sont disposés entre le rétrécissement (104) et le capuchon (80),
**caractérisé en ce que**
l'élément d'étanchéité (60) élastique est déformé élastiquement entre le capuchon (80) et l'élément annulaire (40).

2. Câble de connexion (10) électrique selon la revendication 1, dans lequel le rétrécissement (104) présente au moins une première face de guidage (106) inclinée par rapport à l'axe longitudinal (X) et faisant face au capuchon (80) et dans lequel l'élément annulaire (40) présente une deuxième face de guidage (42) inclinée par rapport à l'axe longitudinal (X) selon un deuxième angle de guidage (44) et faisant face à la première face de guidage (106).

3. Câble de connexion (10) électrique selon la revendication précédente, dans lequel la première face de guidage (106) s'étend depuis une surface intérieure (108) de la zone d'introduction (102) de forme tubulaire, selon un premier angle de guidage (120) par rapport à l'axe longitudinal (X), dans la zone d'introduction (102) de forme tubulaire et forme ce faisant une structure en forme d'entonnoir.

4. Câble de connexion (10) électrique selon la revendication précédente, dans lequel le premier angle de guidage (120) et le deuxième angle de guidage (44) présentent la même valeur par rapport à l'axe longitudinal (X).

5. Câble de connexion (10) électrique selon la revendication 3, dans lequel le premier angle de guidage (120) et le deuxième angle de guidage (44) présentent une valeur de 45° par rapport à l'axe longitudinal (X).

6. Câble de connexion (10) électrique selon l'une quelconque des revendications 2 à 5, dans lequel la première face de guidage (106) est formée par une pluralité de premières faces partielles (106b), dans lequel les premières faces partielles (106b) sont disposées au niveau de nervures (110), qui dépassent dans la zone d'introduction (102) de forme tubulaire.

7. Câble de connexion (10) électrique selon l'une quelconque des revendications 2 à 6, dans lequel la deuxième face de guidage (42) de l'élément annulaire (40) est pressée élastiquement contre la première face de guidage (106) du rétrécissement (104) le long de l'axe longitudinal (X) par l'élément d'étanchéité (60) élastique.

8. Câble de connexion (10) électrique selon l'une quelconque des revendications précédentes, dans lequel l'élément annulaire (40) est constitué d'un corps de forme annulaire, qui présente un point de séparation (46).

9. Câble de connexion (10) électrique selon la revendication précédente, dans lequel le point de séparation (46) s'étend en diagonale par rapport à l'axe de rotation du corps de forme annulaire.

10. Câble de connexion (10) électrique selon l'une quelconque des revendications 2 à 7, dans lequel l'élément annulaire (40) présente une base (48), depuis laquelle s'étend une multitude de doigts (49), dans lequel la base (48) jouxte l'élément d'étanchéité (60) et dans lequel les doigts (49) s'étendent depuis la base (48), parallèlement à l'axe longitudinal (X), de manière répartie le long de la périphérie de l'élément annulaire (40), dans lequel la deuxième face de guidage (42) est formée par une pluralité de deuxièmes faces partielles (42b), qui sont disposées au niveau des extrémités de doigt.

11. Câble de connexion (10) électrique selon l'une quelconque des revendications 2 à 6, dans lequel l'élément annulaire (40) présente un diamètre réduit tant que la deuxième face de guidage (42) de l'élément annulaire (40) est pressée le long de l'axe longitudinal (X) contre la première face de guidage (106) du rétrécissement (104).

12. Câble de connexion (10) électrique selon l'une quelconque des revendications précédentes, dans lequel les moyens de maintien pour fixer le capuchon (80) comprennent au niveau du boîtier enfichable (100) des crochets d'enclenchement (84), qui coopèrent avec des saillies (130) au niveau du boîtier enfichable (100) pour maintenir le capuchon au niveau du boîtier enfichable (100).

13. Procédé de fabrication d'un câble de connexion (10) électrique selon l'une quelconque des revendications précédentes, comprenant les étapes :
de fourniture d'un boîtier enfichable (100), d'un câble (20) électrique, d'un élément annulaire (40), d'un élément d'étanchéité (60) élastique, d'un capuchon (80) et d'un élément de contact (200) ;
de guidage de part en part par glissement d'une extrémité de câble (22) du câble (20) électrique à travers l'ouverture (82) du capuchon (80) ;
d'enfilement de l'élément d'étanchéité (60) élastique sur l'extrémité de câble (22) du câble (20) électrique ;
d'enfilement de l'élément annulaire (40) sur l'extrémité de câble (22) du câble (20) électrique ;
de guidage de part en part par glissement de l'extrémité de câble (22) à travers la zone d'introduction (102) de forme annulaire, à travers le boîtier enfichable (100) ;
d'installation et de connexion électrique de l'élément de contact (200) à l'extrémité de câble (22) du câble (20) électrique ;
de retrait du câble (20) de sorte que l'élément de contact (200) est déplacé dans le boîtier enfichable (100) et s'y enclenche ;
de glissement du capuchon (80) en direction du boîtier enfichable (100) jusqu'à ce que les moyens de maintien bloquent le capuchon (80) au niveau du boîtier enfichable (100), dans lequel l'élément annulaire (40) est pressé contre un rétrécissement (104) dans le boîtier enfichable (100), l'élément d'étanchéité (60) élastique est déformé élastiquement entre le capuchon (80) et l'élément annulaire (40) et bloque ainsi le câble (20) électrique dans le boîtier enfichable (100).

14. Véhicule avec un câble de connexion (10) électrique selon l'une quelconque des revendications 1 à 12.
